# EUROPEAN PATENT APPLICATION

(11) **EP 3 862 508 A1**
(43) Date of publication of application: **11.08.2021**
(21) Application number: 21155561.0
(22) Date of filing: 05.02.2021
(51) Int. Cl.: E04F 17/04, B29C 65/00, E04B 1/348, E04C 1/39, E04C 2/52, E04F 17/08

(54) **A METHOD FOR CONSTRUCTING A PIPELINE IN A SEQUENCE OF PIPING SHAFTS**

(30) Priority: 05.02.2020 FI 20205120
(71) Applicant: Lehto Group OYJ, 90440 Kempele (FI)
(72) Inventor: LIMMA, Jouni, 92930 Pyhäntä (FI); PELO, Jaakko, 85500 Nivala (FI)
(74) Representative: Berggren Oy

(57) **Abstract**

The method for constructing a pipeline in a sequence of piping shafts comprises installing elements on top of one another, the elements having a piping shaft (16) with a lower end and an upper end. Pipes, such as ventilation ducts (18), are placed in the piping shafts, and the pipes placed in the piping shafts are connected to each other into a vertical pipeline. The method comprises installing a lower element with a piping shaft in a building, placing at least one pipe with a lower end and an upper end in the piping shaft of the lower element, installing an upper element with a piping shaft on top of the lower element, and placing at least one pipe with a lower end and an upper end in the piping shaft of the upper element. The method comprises gripping the upper end of the pipe in the piping shaft of the upper element and moving the pipe so that the lower end of the pipe becomes aligned with the upper end of the pipe in the piping shaft of the lower element. The lower end of the pipe in the piping shaft of the upper element is connected to the upper end of the pipe in the piping shaft of the lower element by pressing the pipe in the piping shaft of the upper element towards the pipe in the piping shaft of the lower element.

## Description

### Field of the invention

The invention relates to a method for constructing a pipeline in a sequence of piping shafts, the method comprising the steps of installing elements on top of each other, the elements having a piping shaft, the piping shaft having a lower end and an upper end, placing pipes, such as ventilation ducts, in the piping shafts, and connecting the pipes placed in the piping shafts to each other into a vertical pipeline.

### Prior art

The degree of prefabrication of the interiors of apartment buildings can be increased by constructing the room spaces, at least partly, using prefabricated modular elements, which are installed in the building on the construction site. The use of modular elements is common, especially in the construction of bathrooms. A modular element used in apartment buildings is disclosed in Finnish patent application FI20135383.

Modular elements typically have a floor-to-ceiling piping shaft which houses the pressurized main water pipes, such as the main pipes for domestic hot and cold water, and the main pipes for the water-circulating heating system. Drain pipes and ventilation ducts can be placed in the same piping shaft with the ventilation pipes or they can be placed in their own piping shafts. Separate supply and exhaust air pipes branch out to each modular element from the ventilation ducts. In order to minimize the amount of installation work on the construction site, pipes of the length of the piping shaft are pre-installed in the piping shafts of the modular elements at a prefabrication plant, to be connected at their ends to form a continuous pipeline on the construction site.

The connecting of pipes, especially ventilation ducts, in piping shafts to form a pipeline is problematic. Typically, the ventilation ducts are fixedly attached in place in the piping shaft of the modular element at exactly the planned distance from the other ducts and the walls of the piping shaft. It is intended that when the upper modular element is lowered onto the lower modular element, the ventilation ducts of the upper module and the ventilation ducts of the lower module are aligned and connected to each other by a connecting piece entering the ducts. In practice, there are always dimensional deviations in the installation of ventilation ducts, which is why not all the lower ends of the ducts of the upper modular element align with the ends of the ducts of the lower modular element. The alignment of the ends of the ducts is uncertain, even if the ducts are installed in place in the piping shafts in accordance with the permissible installation tolerances. The interconnection of the ducts can be helped by manually moving the ends of the ducts within the space between the upper and lower modular elements. The manual moving has to be carried out in a cramped space simultaneously with the upper element being lowered into place, which is cumbersome. The interconnection of drain pipes and various protective pipes in the piping shafts involves similar problems.

Due to the alignment problems with the ends of the pipes to be connected, pipes break during the installation, which slows down the installation of the modular elements and results in additional costs. Connecting the ends of the pipes can also lead to faults that are detected later, such as partial loosening of seals, which are difficult and expensive to repair in the finished building.

An object of the invention is to provide a method for constructing a pipeline in a sequence of piping shafts, by which method the problems associated with the prior art can be reduced. The objects of the invention are achieved by a method which is characterized by what is set out in the independent claim. Some preferred embodiments of the invention are set out in the dependent claims.

### Summary of the invention

The invention relates to a method for constructing a pipeline in a sequence of piping shafts. The method comprises installing elements on top of one another, the elements having a piping shaft, which has a lower end and an upper end. Pipes, such as ventilation ducts, are placed in the piping shafts, and the pipes placed in the piping shafts are connected to each other into a vertical pipeline. The method comprises installing a lower element with a piping shaft in a building, placing at least one pipe with a lower end and an upper end in the piping shaft of the lower element, installing an upper element with a piping shaft on top of the lower element, and placing at least one pipe with a lower end and an upper end in the piping shaft of the upper element. The method comprises gripping the upper end of the pipe in the piping shaft of the upper element and moving the pipe so that the lower end of the pipe becomes aligned with the upper end of the pipe in the piping shaft of the lower element. The lower end of the pipe in the piping shaft of the upper element is connected to the upper end of the pipe in the piping shaft of the lower element by pressing the pipe in the piping shaft of the upper element towards the pipe in the piping shaft of the lower element. Preferably, the pipes are placed in the piping shaft of the lower element before the lower element is installed in place in the building.

The lower element may be the lowest element with a piping shaft in the building, on top of which other elements with piping shafts are installed, or the lower element may be any single element of an element tower consisting of stacked elements, on top of which an upper element with a piping shaft is installed. The piping shafts of the stacked individual elements are aligned and form a sequence of piping shafts into which the pipeline is formed.

In a preferred embodiment of the method according to the invention, the pipes are placed in the piping shaft of the upper element so that they are movable in the longitudinal direction of the pipe and in a direction transverse to the longitudinal direction before the upper element is installed on top of the lower element. The play of the pipe in the longitudinal direction can be 5-10 cm and in the transverse direction, 2-5 cm. Preferably, the pipes are placed in the piping shaft of the lower element and the piping shaft of the upper element at the prefabrication plant.

In another preferred embodiment of the method according to the invention, two, three, four or more than four pipes are placed in the piping shaft of the lower element and two, three, four or more than four upper pipes are placed in the piping shaft of the upper element.

In yet another preferred embodiment of the method according to the invention, pipes are placed in the piping shaft of the lower element and the piping shaft of the upper element in at least two rows so that the pipes of the adjacent pipe rows are not aligned in the direction transverse to the longitudinal direction of the pipe rows. Preferably, the pipes in second row are located at the gaps between the pipes in the first row. With this installation method, the pipe rows can be placed closer to each other in the transverse direction of the pipe row, thus requiring less space.

In yet another preferred embodiment of the method according to the invention, before installing the upper element on top of the lower element, an extension piece is installed on the upper ends of the pipes in the piping shaft of the lower element and, after the installation of the upper element, the lower ends of the pipes in the piping shaft of the upper element are pressed onto said extension pieces. The extension piece may be an extension piece tightly fitted inside the upper ends of the pipes or an extension piece tightly surrounding the upper ends of the pipes. Preferably, the extension pieces are attached to a mounting plate and the mounting plate is secured in place at the upper end of the piping shaft of the lower element. At least two extension pieces can be attached to the mounting plate so that each extension piece is connected to its own pipe. With the mounting plate, the extension pieces at the upper ends of the pipes can be fixedly supported in place in the lower element, which facilitates the connection of the pipes of the upper element.

In yet another preferred embodiment of the method according to the invention, at least one of said pipes is a ventilation duct. Pipes to be installed in the same piping shaft can be of the same size or different sizes. At least one of said pipes may be a drain pipe or a protective pipe for an electric wire or cable.

In yet another preferred embodiment of the method according to the invention, said lower and upper elements are modular elements comprising a room space defined by a floor slab, a roof and walls, with a first end of the piping shaft extending to the lower surface of the floor slab and a second end of the piping shaft extending to the upper surface of the roof. A person handling the pipes of the upper modular element can then work on the roof of the modular element. Preferably, said lower and upper elements comprise a bathroom.

In yet another preferred embodiment of the method according to the invention, the upper element is installed on top of the lower element so that a substantially free space remains between the lower surface of the floor slab of the upper element and the upper surface of the roof of the lower element. Pipes and wires of the HVAC and electrical systems belonging to the element can be placed in the free space between the elements. Preferably, the upper element is attached by its floor slab to the building frame or intermediate floor and the loads of the upper element are transferred through the building frame to the foundations of the building. Thus, practically no loads are transferred from the upper modular element to the lower modular element, whereby each modular element can be designed to bear only the load caused by its own weight and the personnel load of the element.

In yet another preferred embodiment of the method according to the invention, said lower and upper elements are wall elements comprising a lower edge and an upper edge, with a first end of the piping shaft extending to the lower edge and a second end of the piping shaft extending to the upper edge.

The invention has the advantage that it significantly facilitates the interconnection of the pipes in the piping shafts, in particular the ventilation ducts. As the installation work becomes easier, errors and material waste are reduced.

In addition, the invention has the advantage that latent installation errors and the resulting repair costs are reduced.

The invention has a further advantage that it makes it possible to install the pipes in the piping shafts in at least two rows so that pipes in adjacent pipe rows are not aligned in a direction transverse to the longitudinal direction of the pipe rows. With this installation method, the piping shaft can house more pipes.

### Brief description of the drawings

The invention is described in detail below. In the description, reference is made to the accompanying drawings in which
Fig. 1 shows by way of example a modular element according to the invention in a horizontal cross-sectional view,
Figs. 2a-2g show the various steps of the method according to the invention in a series of images.

### Detailed description of the invention

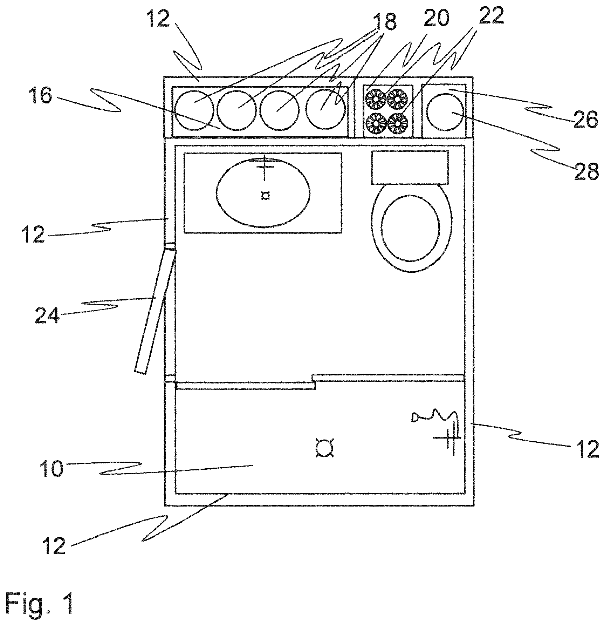

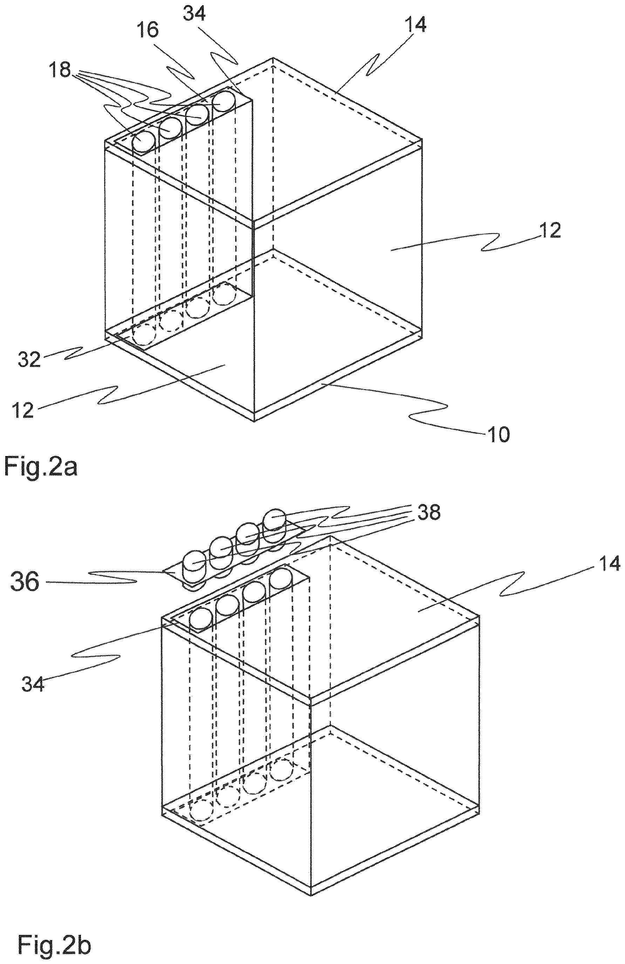

Fig. 1 shows by way of example an element used in the method according to the invention in a horizontal sectional view. The element shown in the drawing is a modular element with a floor slab 10 made of reinforced concrete, a roof 14 (Fig. 2a) and four walls 12, which define a room space of rectangular cross-section above the floor slab. One wall 12 of the modular element has a piping shaft 16 defined by walls, inside which there are four ventilation ducts 18 with a circular cross-section along the longitudinal direction of the piping shaft. Adjacent to the piping shaft there is a shaft 20 for pressurized main water pipes, inside which there are thermally insulated main pipes 22 for domestic cold and hot water and the supply and return pipes of a water-circulating heating system. Adjacent to the shaft for the main water pipes there is a drain pipe shaft 26 with a drain pipe 28 inside.

The room space defined by the modular element shown in Fig. 1 is a bathroom, so inside it there are usually pre-installed bathroom furniture, such as a toilet, sink and shower mixer. On one long wall of the modular element there is a door 24.

The modular element is a building component prefabricated at a prefabrication plant to be installed in place in the building on the construction site. The ventilation ducts, main water pipes and the drain pipe are installed in their own shafts at the prefabrication plant. The ventilation ducts 18 are movably installed in the piping shaft 16 so that they can be moved inside the piping shaft in the longitudinal direction of the ventilation duct and in the direction transverse to the longitudinal direction. Preferably, the play of the ventilation duct in the longitudinal direction is 5-10 cm and in the transverse direction, 2-5 cm.

Figs. 2a-2g show the various steps of the method according to the invention by means of a series of images. Fig. 2a shows the modular element according to Fig. 1 in a simplified view, so that only the floor slab 10, the walls 12, the roof 14, the piping shaft 16 and the ventilation ducts 18 in the piping shaft are shown of the modular element. The piping shaft is open at both ends, i.e. it has a lower end opening into a lower opening 32 in the floor slab and an upper end opening into an upper opening 34 in the roof 14.

In the method according to the invention, the lowest modular element in the building is installed first and is referred to as the lower element. Typically, the lowest modular element is the modular element installed on the lowest residential floor of the building. The modular element is lowered into its place inside the building by a crane and fastened from the floor slab 10 to the base floor or intermediate floor of the building. Preferably, aligned openings are formed in the intermediate floors of the building, slightly larger than the dimensions of the floor slab of the modular element, through which all the stacked modular elements can be lowered into place on the correct floors.

Once the lower modular element is in place, an extension piece 38 is attached to the upper end of each ventilation duct visible from the upper opening 34, by means of which the lower end of the ventilation duct of the upper modular element can be connected to the upper end of the lower ventilation duct. The extension pieces are attached to the same mounting plate 36 so that the extension pieces are at suitable distances from each other in the extension plate (Fig. 2b). The mounting plate is attached to the upper end of the piping shaft in the lower modular element so that the extension plate substantially completely covers the upper opening 34 in the roof 14 of the modular element and the lower ends of the extension pieces are located inside the upper ends of the ventilation ducts in the lower modular element. With the mounting plate, the extension pieces are immovably fixed to the roof of the lower modular element.

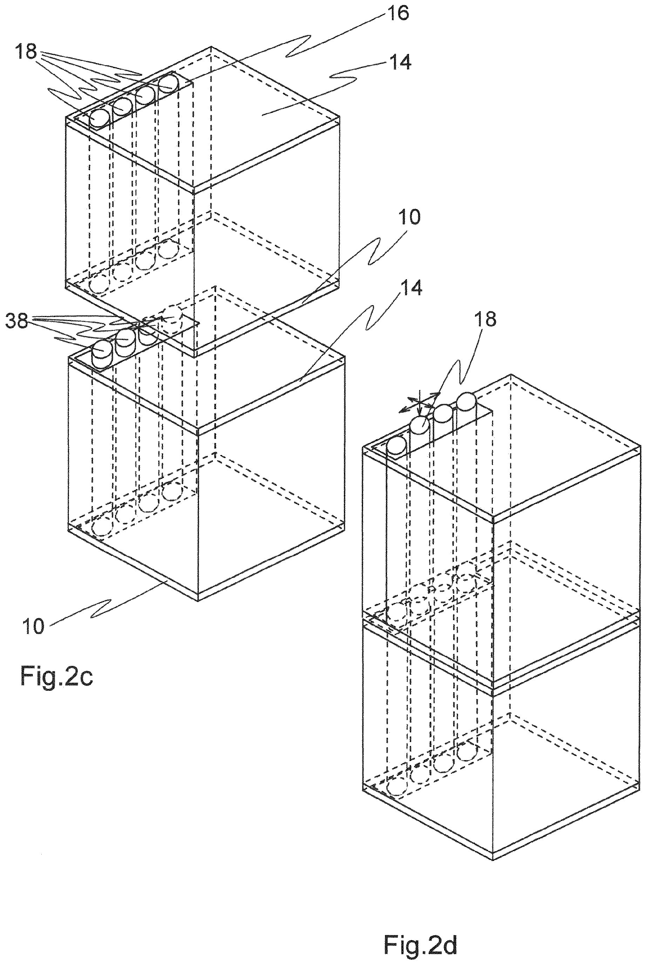

Next, an upper modular element is lowered onto the lower modular element so that the floor slab 10 of the upper modular element rests against the roof 14 of the lower modular element (Fig. 2c). The upper modular element is similar in structure to the lower modular element. The upper modular element is attached from the floor slab to an intermediate floor or the frame of the building. Inside the piping shaft 16 of the upper modular element there are movably attached ventilation ducts 18. When the upper modular element is lowered onto the lower modular element, the lower ends of the ventilation ducts of the upper modular element abut against the upper ends of the extension pieces. The movable attachment of the ventilation ducts causes the ventilation ducts of the upper modular element to rise slightly upwards within their allowable limits of movement.

Once the upper modular element is fixed in place, the ventilation ducts 18 therein are attached to the extension pieces 38 in the lower modular element. The attachment takes place by first gripping one of the ventilation ducts in the piping shaft 16 of the upper modular element from its upper end and moving the ventilation duct laterally so that its lower end becomes aligned with the extension piece in the lower modular element. The ventilation duct is then pushed downwards so that the upper end of the extension piece enters the lower end of the ventilation duct (Fig. 2d). In the same way, all the ventilation ducts in the piping shaft of the upper modular element are connected one by one to the extension pieces of the lower modular element. During the installation work, the installer moves about on the roof of the upper modular element and manipulates the ventilation ducts through the upper opening 34 in the roof. In Fig. 2d, the ventilation duct at a first edge of the piping shaft is connected to an extension piece, and the adjacent ventilation duct is in the installation phase. The other two ventilation ducts are waiting for their turn to be installed.

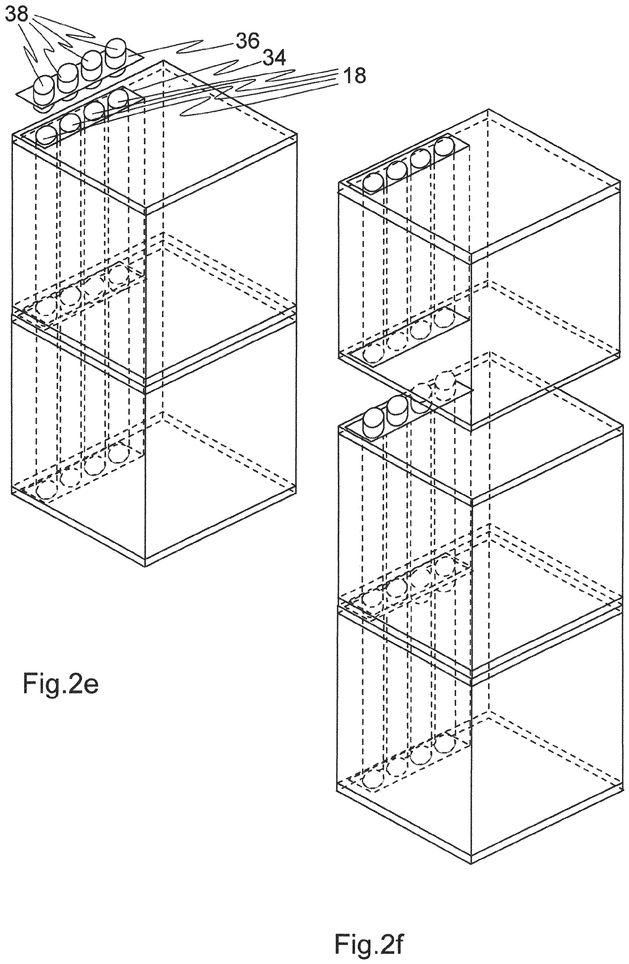

Once all the ventilation ducts of the upper modular element have been pushed in place on the extension pieces of the lower modular element, the above-described mounting plate 36 is attached to the upper opening 34 of the upper modular element so that the lower ends of the mounting plate extension pieces 38 enter the upper ends of the ventilation ducts 18 that open into the upper opening. The mounting plate is installed from the roof of the upper modular element (Fig. 2e).

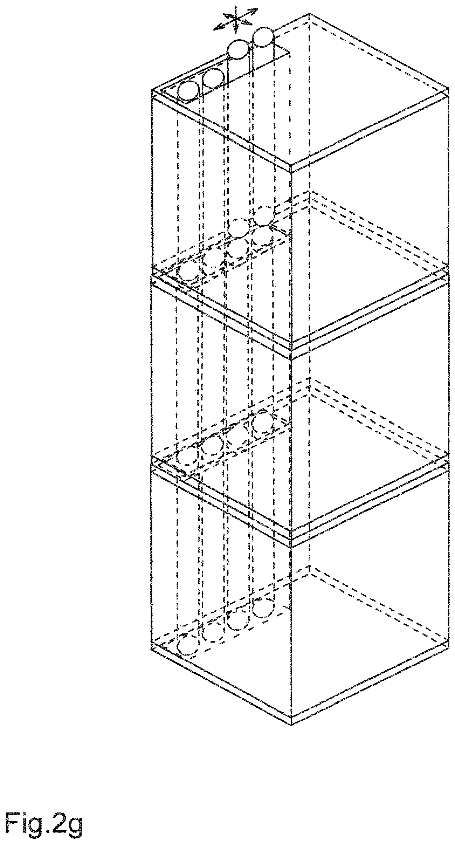

Fig. 2f shows how a third modular element is installed on top of two stacked modular elements and Fig. 2g shows how the ventilation ducts of the third modular element are connected to those of the lower modular element. The installation of the modular elements continues in the same way until all the stackable modular elements have been installed in place. Whenever a new modular element is installed, the previous modular element installed in place is treated as a lower element and the modular element to be installed on top of it is treated as an upper element as described above.

In the above description, the extension pieces at the upper ends of all ventilation ducts of a single modular element are attached to the same mounting plate. However, in order to facilitate the installation work, it may be expedient to use several mounting plates with a smaller number of extension pieces in an upper opening. One, two or three extension pieces, for example, can then be attached to one mounting plate.

In the above description, the modular elements were installed one on top of the other so that the floor slab of the upper modular element rests against the upper surface of the roof of the lower modular element. Alternatively, the modular elements can be installed one on top of the other so that there remains a free space between the upper surface of the roof of the lower modular element and the lower surface of the floor slab of the upper modular element. Such a method of installation is particularly suitable when the modular elements are fixed and supported from their floor slabs to an intermediate floor or the frame of the building so that no loads are transferred from the upper modular element to the lower modular element at all. The height of the free space can be 20-50 cm. This free space can be utilized, for example, as a space for the installation of pipes and wires of the HVAC and electrical systems of the modular element.

Some preferred embodiments of the method according to the invention have been described above. The invention is not limited to the solutions described above, but the inventive idea can be applied in various ways within the scope set by the claims.

### List of reference numbers:

- 10: floor slab
- 12: wall
- 14: roof
- 16: piping shaft
- 18: ventilation duct
- 20: main water pipe shaft
- 22: main water pipe
- 24: door
- 26: drain pipe shaft
- 28: drain pipe
- 30: toilet
- 32: lower opening
- 34: upper opening
- 36: mounting plate
- 38: extension piece

## Claims

1. A method for constructing a pipeline in a sequence of piping shafts, the method comprising installing elements on top of each other, the elements having a piping shaft (16), the piping shaft (16) having a lower end and an upper end, placing pipes, such as ventilation ducts (18), in the piping shafts, and connecting the pipes placed in the piping shafts (16) to each other into a vertical pipeline, **characterized by**
- installing a lower element with a piping shaft (16) in place in a building,
- placing at least one pipe with a lower end and an upper end in the piping shaft of the lower element,
- installing an upper element with a piping shaft (16) on top of the lower element,
- placing at least one pipe with a lower end and an upper end in the piping shaft (16) of the upper element, and
- gripping the upper end of the pipe in the piping shaft (16) of the upper element and moving the pipe so that the lower end of the pipe becomes aligned with the upper end of the pipe in the piping shaft (16) of the lower element, and
- connecting the lower end of the pipe in the piping shaft (16) of the upper element to the upper end of the pipe in the piping shaft (16) of the lower element by pressing the pipe in the piping shaft (16) of the upper element towards the pipe in the piping shaft (16) of the lower element.

2. The method of claim 1, **characterized in that** the pipes are placed in the piping shaft (16) of the lower element before the lower element is installed in place in the building.

3. The method of claim 1 or 2, **characterized in that** the pipes are placed in the piping shaft (16) of the upper element so that they are movable in the longitudinal direction of the pipe and in the direction transverse to the longitudinal direction before the upper element is installed on top of the lower element.

4. The method of any of claims 1-3, **characterized in that** the pipes are placed in the piping shaft (16) of the lower element and the piping shaft (16) of the upper element at a prefabrication plant.

5. The method of any of claims 1-4, **characterized in that** two, three, four or more than four pipes are placed in the piping shaft (16) of the lower element and two, three, four or more than four upper pipes are placed in the piping shaft (16) of the upper element.

6. The method of any of claims 1-5, **characterized in that** pipes are placed in the piping shaft (16) of the lower element and the piping shaft (16) of the upper element in at least two rows so that pipes in adjacent pipe rows are not aligned in a direction transverse to the longitudinal direction of the pipe rows.

7. The method of any of claims 1-6, **characterized in that**, before installing the upper element on top of the lower element, an extension piece (38) is installed on the upper ends of the pipes in the piping shaft (16) of the lower element and, after the installation of the upper element, the lower ends of the pipes in the piping shaft (16) of the upper element are pressed onto said extension pieces (38).

8. The method of claim 7, **characterized in that** said extension pieces (38) are attached to a mounting plate (36) and the mounting plate (36) is fixed in place at the upper end of the piping shaft (16) of the lower element.

9. The method of claim 8, **characterized in that** at least two extension pieces (38) are attached to the mounting plate (36) and each extension piece is connected to its own pipe.

10. The method of any of claims 1-9, **characterized in that** at least one of said pipes is a ventilation duct (18).

11. The method of any of claims 1-9, **characterized in that** at least one of said pipes is a drain pipe (28) or a protective pipe for an electric wire or cable.

12. The method of any of claims 1-11, **characterized in that** said lower and upper elements are modular elements comprising a room space defined by a floor slab (10), a roof (14) and walls (12), and the first end of the piping shaft (16) extends to the lower surface of the floor slab (10) and the second end of the piping shaft extends to the upper surface of the roof (14).

13. The method of claim 12, **characterized in that** said lower and upper elements comprise a bathroom.

14. The method of claim 12 or 13, **characterized in that** the upper element is installed on top of the lower element so that a substantially free space remains between the lower surface of the floor slab (10) of the upper element and the upper surface of the roof (14) of the lower element.

15. The method of any of claims 12-14, **characterized in that** the upper element is supported from the floor slab (10) to the building frame or intermediate floor and the loads of the upper element are transferred through the building frame to the foundations of the building.

16. The method of any of claims 1-11, **characterized in that** said lower and upper elements are wall elements comprising a lower edge and an upper edge, and a first end of the piping shaft extends to the lower edge, and a second end of the piping shaft extends to the upper edge.
